(19) Europäisches Patentamt / European Patent Office / Office européen des brevets

(11) **EP 1 590 581 B1**

(12) **EUROPÄISCHE PATENTSCHRIFT**

(45) Veröffentlichungstag und Bekanntmachung des Hinweises auf die Patenterteilung:
**08.10.2008 Patentblatt 2008/41**

(21) Anmeldenummer: **04707153.5**

(22) Anmeldetag: **31.01.2004**

(51) Int Cl.:
*F16H 3/12* (2006.01)     *F16H 61/04* (2006.01)

(86) Internationale Anmeldenummer:
**PCT/EP2004/000863**

(87) Internationale Veröffentlichungsnummer:
**WO 2004/070232 (19.08.2004 Gazette 2004/34)**

(54) **VERFAHREN ZUR STEUERUNG UND REGELUNG EINER GETRIEBEBREMSE EINES ALS VORGELEGEGETRIEBE AUSGEBILDETEN AUTOMATGETRIEBES**

METHOD FOR AUTOMATICALLY CONTROLLING A TRANSMISSION BRAKE OF AN AUTOMATIC TRANSMISSION CONFIGURED AS A COUNTERSHAFT TRANSMISSION

PROCEDE POUR COMMANDER ET REGULER UN FREIN D'ENGRENAGE D'UNE TRANSMISSION AUTOMATIQUE CONFIGUREE COMME UNE TRANSMISSION INTERMEDIAIRE

(84) Benannte Vertragsstaaten:
**DE SE**

(30) Priorität: **08.02.2003 DE 10305254**

(43) Veröffentlichungstag der Anmeldung:
**02.11.2005 Patentblatt 2005/44**

(73) Patentinhaber: **ZF FRIEDRICHSHAFEN Aktiengesellschaft 88038 Friedrichshafen (DE)**

(72) Erfinder:
• STEINBORN, Mario
  88045 Friedrichshafen (DE)
• KALTHOFF, Rudolf
  88250 Weingarten (DE)
• BACHMANN, Volker
  88097 Eriskirch (DE)
• KRAMER, Rupert
  88048 Friedrichshafen (DE)

(56) Entgegenhaltungen:
EP-A- 0 947 741     DE-A- 19 652 916
US-A- 3 834 499     US-A- 5 425 689

EP 1 590 581 B1

**Beschreibung**

Die Erfindung betrifft ein Verfahren zur Steuerung und Regelung des Arbeitsverhaltens einer Getriebebremse eines als Vorgelegegetriebe ausgebildeten Automatgetriebes gemäß dem Oberbegriff des Anspruchs 1 und wie aus der US3834499 bekannt.

Es ist allgemein bekannt, dass manuelle und automatisierte Schaltgetriebe in der Regel über eine Eingangswelle, eine zur Eingangswelle koaxiale Ausgangswelle und eine Vorgelegewelle verfügen. Der Gangsanzahl entsprechend befinden sich auf den Getriebewellen Zahnradpaare, bei denen jeweils ein auf einer Getriebewelle befestigtes Festrad mit wenigstens einem auf einer weiteren Getriebewelle angeordneten Losrad kämmt.

Bei einem Gangschaltvorgang wird in der Regel eines der Losräder mit seiner Getriebewelle über eine formschlüssig wirkende Koppelvorrichtung drehfest verbunden, die das gesamte Antriebsmoment überträgt. Um große Antriebsmomente mit einfachen, platzsparenden und leicht zu schaltenden Mitteln übertragen zu können, verwendet man vorzugsweise formschlüssige Kupplungen. Während des Schaltvorgangs wird die Zugkraft des Antriebsmotors jedoch mittels einer gesonderten Schalt- und Anfahrkupplung unterbrochen.

Um solche Getriebe einfach, leicht, stoßfrei, schnell und geräuscharm schalten zu können, müssen die zu schaltenden Teile der Koppelvorrichtungen nahezu die gleiche Drehzahl aufweisen, bevor diese ineinander greifen. Hierzu sind Synchronisationsvorrichtungen vorgesehen, die den antriebsseitigen Teil des Antriebsstranges zwischen der Schalt- und Anfahrkupplung und der jeweils zu schaltenden Koppelvorrichtung während der Zugkraftunterbrechungsphase auf eine Drehzahl verzögert bzw. beschleunigt, die durch die Fahrgeschwindigkeit und die Getriebeübersetzung des Zielgangs vorgegeben ist. Schaltet man von einem niedrigen Gang in einen höheren Gang, so wird durch diese Synchronisationsvorrichtungen der antriebsseitige Teil des Getriebes verzögert, während dieser bei einem Rückschaltvorgang beschleunigt wird.

Die üblichen Synchronisationsvorrichtungen verfügen für diese Beschleunigungs- bzw. Abbremsvorgänge über Reibkupplungen in Form von Reibkegeln. Diese müssen nicht das gesamte Antriebsmoment übertragen, sondern nur die Synchronisationsarbeit verrichten, die sich aus dem Trägheitsmoment der rotierenden Massen des antriebsseitigen Teils des Getriebes sowie der reibungsbedingten Schleppmomente ergibt. Sie können daher entsprechend klein dimensioniert sein.

Üblicherweise ist jeder der formschlüssigen Koppelvorrichtungen eine Synchronisationsvorrichtung zugeordnet. Es ist aber auch möglich, dass eine zentrale Synchronisationsvorrichtung die Synchronisationsarbeit für mehrere oder alle formschlüssigen Koppelvorrichtungen übernimmt.

Um den Fahrer eines Fahrzeuges von den mit den Schaltvorgängen verbundenen mechanischen Schalt- und Kuppelvorgängen zu entlasten, werden bei automatisierten Schaltgetrieben diese Schalt- und Kuppelvorgänge von hilfskraftbetätigbaren Stellvorrichtungen vorgenommen, die von einer Steuerungs- und Regelungsvorrichtung angesteuert werden. Dazu ermittelt eine solche Steuerungs- und Regelungsvorrichtung aus Fahrzeugsensordaten die auf den jeweiligen Schaltvorgang bezogenen Fahrerwünsche und steuert und regelt auf deren Grundlage mittels abgespeicherter Steuerungs- und Regelungsprogramme die Schaltabläufe in dem Getriebe.

Bei solchen automatisierten Schaltgetrieben ist der Synchronisationsvorgang beispielsweise dadurch steuer- und regelbar, dass bei Rückschaltvorgängen die Drehzahl der Getriebeeingangswelle oder der Vorgelegewelle durch Erhöhen der Motordrehzahl angehoben wird, während bei Hochschaltvorgängen diese antriebsseitigen Wellen des Getriebes abgebremst werden. Zur Durchführung derartiger Abbremsvorgänge verfügen zentral synchronisierte Getriebe üblicherweise über eine Getriebebremse, die mit der Vorgelegewelle mechanisch gekoppelt ist. Derartige Getriebebremsen sind elektrisch, hydraulisch oder aber auch pneumatisch betätigbar, wobei letztere Betätigungsart häufig bei Nutzfahrzeuggetrieben genutzt wird.

So ist aus der DE 196 52 916 A1 ein automatisiertes Schaltgetriebe mit einer hydraulisch oder pneumatisch betätigbaren Getriebebremse bekannt, bei dem letztere auf eine Vorgelegewelle einwirken kann. Die Druckmittelsteuerventile der Getriebebremse werden dazu von einem Mikroprozessor in Abhängigkeit von der gewünschten Schaltart und den sonstigen Fahrbetriebsbedingungen gesteuert.

Wird beispielsweise ein höherer Gang vorgewählt und muss die Vorgelegewelle zur Synchronisierung abgebremst werden, so wird von dem Mikroprozessor ausgehend von der vorgewählten Übersetzung und von der mittels eines Sensors erfassten Getriebeausgangsdrehzahl eine Solldrehzahl (Synchrondrehzahl) für die Vorgelegewelle berechnet, bei deren Erreichen die mechanische Kopplung des Zielganglosrades mit dieser Welle erfolgen kann.

Wegen des in der Regel nur schwer zu regulierenden Luftdrucks sowie anderer wechselnder Umgebungsbedingungen ist die Bremsleistung der Getriebebremse jedoch starken Schwankungen unterworfen. Um das erforderliche Drehzahlfenster, also den vorgegebenen maximalen Abstand der Ist-Drehzahl der Getriebeeingangswelle bzw. der von dieser angetriebenen Vorgelegewelle zu der Solldrehzahl für den konkreten Schaltvorgang zu erreichen, wird nach diesem Stand der Technik zusätzlich auch noch der Bremsgradient der Getriebebremse ermittelt und von dem Mikroprozessor bei der Steuerung der Getriebebremse berücksichtigt. Dazu werden die Steuerventile in der Weise von dem Mikroprozessor angesteuert, dass die genannten Sollwertvorgaben und damit die Synchrondrehzahl zum Einrücken der Koppelvorrichtung an dem betroffenen Losrad erreicht wird.

Leider ist die Synchrondrehzahl keine feste Größe für einen Schaltvorgang, sondern u.a. abhängig von der Fahrbahnneigung, da es während eines Schaltvorgangs bei geöffneter Anfahr- und Schaltkupplung sowie einer Steigung zu einer negativen Fahrzeugbeschleunigung und damit zu einem Abfall der Getriebeausgangsdrehzahl und bei einer Gefällestrecke bei nicht betätigter Betriebsbremse des Fahrzeugs zu einer positiven Fahrzeugbeschleunigung kommt. Diese Einflüsse wurden bei den Steuerungs- und Regelungsverfahren für Getriebebremsen nach dem Stand der Technik bisher nicht berücksichtigt, so dass deren Arbeitsweise eher unvollkommen war.

Die Aufgabe an die Erfindung besteht daher darin, die Steuerung und Regelung von Getriebebremsen weiter zu verbessern.

Die Lösung dieser Aufgabe ergibt sich aus den Merkmalen des Hauptanspruchs, während vorteilhafte Weiterbildungen und Ausgestaltungen der Erfindung den Unteransprüchen entnehmbar sind.

Demnach betrifft die Erfindung die Steuerung und Regelung der Getriebebremse eines als Vorgelegegetriebe ausgebildeten Automatgetriebes, zu dem eine Getriebeeingangswelle, wenigstens eine von der Getriebeeingangswelle antreibbare Vorgelegewelle und eine Getriebeausgangswelle gehört. Die Getriebeeingangswelle ist über eine Anfahr- und Schaltkupplung mit der Antriebswelle eines Antriebsmotors verbindbar, während die Getriebeausgangswelle über mindestens ein Differentialgetriebe mit zu den Fahrzeugrädern führenden Antriebswellen antriebstechnisch in Verbindung steht. Auf der Getriebeeingangswelle, auf der oder den Vorgelegewellen und/oder auf der Getriebeausgangswelle sind Loszahnräder drehbar gelagert und Festzahnräder drehfest angeordnet, die zumindest paarbildend in Zahneingriff miteinander stehen. Außerdem verfügt ein solches Getriebe über formschlüssige Koppelvorrichtungen, mit deren Hilfe die Losräder bei der Durchführung eines Gangwechsels in der Regel alternativ zueinander mit deren Getriebewelle drehfest verbindbar sind.

Zudem ist ein derartiges Getriebe mit einer Getriebebremse ausgestattet und mit einem Steuergerät für zumindest diese Getriebebremse signaltechnisch verbunden. Mit Hilfe der Getriebebremse kann die wenigstens eine Vorgelegewelle bei einem Hochschaltvorgang derartig abgebremst werden, dass deren Drehzahl zum Einkoppelzeitpunkt der Synchrondrehzahl entspricht oder dieser bis auf einen vorbestimmen Abstand nahe kommt. Dabei wird zur Steuerung und Regelung der Getriebebremse der Bremsgradient der Vorgelege- bzw. Getriebeeingangswellendrehzahl sowie die Getriebeausgangswellendrehzahl berücksichtigt.

Zur Verbesserung eines Getriebehochschaltvorgangs ist nun erfindungsgemäß vorgesehen, dass zusätzlich zu den vorgenannten Größen zur Steuerung und Regelung der Getriebebremse der Gradient der Getriebeausgangswellendrehzahl ausgewertet wird. Durch diese Vorgehensweise wird die Getriebeausgangswellendrehzahl mit der Übersetzung des Zielganges auf die Drehzahl der Vorgelegewelle bezogen, sowie Umwelt-und/oder Fahrstreckeneinflüsse auf den Schaltvorgang besser als bisher berücksichtigt. Insbesondere während des Schaltvorgangs auftretende schnelle Änderungen der Getriebeausgangswellendrehzahl können so in die Steuerung und Regelung der Getriebebremse mit einbezogen werden.

Erfindungsgemäß ist weiterhin vorgesehen, dass aus dem Gradient der Getriebeeingangs- bzw. Vorgelegewellendrehzahl und dem Gradient der Getriebeausgangswellendrehzahl ein Summengradient errechnet wird. Dieser Summengradient wird zur Berechnung des Abschaltzeitpunktes der Getriebebremse bei Erreichen des Synchronzeitpunktes genutzt. Der Abschaltzeitpunkt kann damit auch bei variierenden Getriebebremsreibwerten und sich verändernden Abtriebsdrehzahlgradienten für einen sicheren, schnellen und ruckfreien Schaltvorgang bestimmt werden.

Die dem erfindungsgemäßen Steuerungs- und Regelungsverfahren zugrunde liegenden mathematisch-physikalischen Zusammenhänge sowie die daraus entwickelten Gleichungen lassen sich anhand der einzigen Zeichnung herleiten und erläutern. In dieser Zeichnung sind die Drehzahlverläufe der Soll-Drehzahl $n_{Soll}$ und der Ist-Drehzahl $n_{Ist}$ der Getriebeeingangswelle bzw. der Vorgelegewelle während eines Rückschaltvorganges vor und nach dem Erreichen des Synchronzeitpunktes $t_S$ dargestellt. Dabei ist der Synchronzeitpunkt als der Zeitpunkt definiert, in dem sich der Soll- und der Ist-Verlauf der Getriebeeingangs- bzw. Vorgelegewellendrehzahl in dieser Darstellung schneiden. Da die Getriebeeingangswelle die Vorgelegewelle des Getriebes in der Regel über eine Festradverzahnung antreibt, sind die Drehzahlen von Getriebeeingangswelle und Vorgelegewelle proportional zueinander, so dass es keinen Unterschied macht, ob die Getriebeeingangswellendrehzahl oder die Vorgelegewellendrehzahl für die Steuerung und Regelung der Getriebebremse genutzt wird.

Wenngleich es bei dem erfindungsgemäßen Verfahren um das Abbremsen einer Getriebewelle bei einem Hochschaltvorgang geht, so lassen sich die grundlegenden Zusammenhänge während eines Getriebeschaltvorgangs auch anhand dieser Darstellung gut verständlich machen.

Demnach gilt für die Drehzahldifferenz $\Delta n_i$ zwischen der Soll-Drehzahl $n_{soll}$ und der Ist-Drehzahl $n_{Ist}$ Getriebeeingangs- bzw. Vorgelegewelle zum Zeitpunkt $t_i$

$$\Delta n_i = n_{Soll} - n_{Ist} \qquad\qquad (Gl. 1)$$

sowie für den oben eingeführten Drehzahlsummengradienten

$$\overset{\bullet}{n} \;=\; \frac{\Delta n_i - \Delta n_{i-1}}{t_p} \qquad\qquad\qquad (Gl.\ 2)$$

mit $t_p$ für eine vorgewählte Abtast- oder Programmzykluszeit.

Die Drehzahldifferenz $\Delta n$ zwischen der Soll-Drehzahl $n_{Soll}$ und der Ist-Drehzahl $n_{Ist}$ Getriebeeingangs- bzw. Vorgelegewelle beträgt demnach in dem Zeitraum I vor dem Synchronzeitpunkt $I_S$ für eine Rückschaltung $\Delta n_i > 0$, während diese für eine Hochschaltung $n_{Soll} < n_{Ist} \Rightarrow \Delta n_i < 0$ ist.

Demnach ergibt sich für den Drehzahlsummengradient $\Delta \dot{n}$ bei einer Rückschaltung ein Wert von

$$\left| \Delta n_i \right| < \left| \Delta n_{i-1} \right| \Rightarrow \overset{\bullet}{n} < 0 \qquad\qquad\qquad (Gl.\ 3)$$

und bei einer Hochschaltung von

$$\left| -\Delta n_i \right| < \left| -\Delta n_{i-1} \right| \Rightarrow \overset{\bullet}{n} > 0 \qquad\qquad\qquad (Gl.\ 4)$$

Für die Drehzahlverhältnisse im Zeitraum II nach dem Synchronzeitpunkt $I_S$ gelten dagegen die Gleichungen

$$\Delta n_i < 0 \qquad (n_{Soll} < n_{Ist}) \qquad\qquad\qquad (Gl.\ 5)$$

für eine Rückschaltung, und

$$\Delta n_i > 0 \qquad\qquad\qquad (Gl.\ 6)$$

für eine Hochschaltung.

Daher hat der Drehzahlsummengradient $\Delta \dot{n}$ bei einer Rückschaltung im Zeitraum II nach dem Synchronzeitpunkt $I_S$ ein Wert von

$$\left| -\Delta n_i \right| < \left| -\Delta n_{i-1} \right| \Rightarrow \overset{\bullet}{n} < 0 \qquad\qquad\qquad (Gl.\ 7)$$

und bei einer Hochschaltung von

$$\left| \Delta n_i \right| < \left| \Delta n_{i-1} \right| \Rightarrow \overset{\bullet}{n} > 0 \qquad\qquad\qquad (Gl.\ 8)$$

Der Synchronzeitpunkt $I_S$ lässt sich aus dem Quotienten der Drehzahldifferenz $\Delta n_i$ zwischen der Soll-Drehzahl

$n_{Soll}$ und der Ist-Drehzahl $n_{Ist}$ Getriebeeingangs- bzw. Vorgelegewelle und dem Drehzahlsummengradient $\dot{n}$ errechnen, so dass für den Synchronzeitpunkt gilt

$$t_S = \frac{\Delta n}{\dot{n}} \qquad (Gl.\ 9)$$

Eine Umformung auf zeitlich diskrete Schritte i für die Programmierung eines Steuerungs- und Regelungsgerätes ergibt für den Drehzahlsummengradient $\dot{n}$

$$\frac{\Delta n_i}{\Delta n_{i-1}} = \frac{t_{Si}}{t_{Si-1}} \Rightarrow \dot{n} = \frac{\Delta n_i}{t_{Si}} = \frac{\Delta n_{i-1}}{t_{Si-1}} \qquad (Gl.\ 10)$$

in der $t_{Si}$ für den Zeitraum vom Zeitpunkt $t_i$ bis zum Synchronzeitpunkt $t_S$ steht.
Durch Umformung von Gleichung (Gl. 10) unter Nutzung von Gleichung (Gl. 2) gelangt man zu der Gleichung

$$t_p = t_{Si} - t_{Si-1} = \frac{\Delta n_i}{\dot{n}} - \frac{\Delta n_{i-1}}{\dot{n}} = \frac{\Delta n_i - \Delta n_{i-1}}{\dot{n}} \qquad (Gl.\ 11)$$

die sich in die Gleichung für den Drehzahlsummengradient $\dot{n}$

$$\dot{n} = \frac{\Delta n_i - \Delta n_{i-1}}{t_p} \qquad (Gl.\ 12)$$

umwandeln lässt. Darin kann für eine konkrete Programmierung eine Programmzykluszeit $t_p$ von vorzugsweise 10 ms vorgesehen sein. In einem solchen Fall ist der Drehzahlsummengradient $\dot{n}$ normiert mit $t_p$ = 10 ms, was dem Wert $t_p$ = 1 entspricht bzw. mit bei einer überlappenden Berechnung bei $t_p$ = 20ms zu einem Wert $t_p$ = 2 führt.
Zudem ergibt sich der Zeitraum $t_{Si}$ vom Zeitpunkt $t_i$ bis zum Synchronzeitpunkt $t_S$ durch die Gleichung

$$t_{Si} = \frac{\Delta n_i}{\dot{n}} = k * t_p \qquad (Gl.\ 13)$$

mit k für die Anzahl der Programmzyklen bis zum Erreichen des Synchronzeitpunktes $t_S$.
Die konkreten Ausführungsschritte in einem solchen Steuerungsprogrammablauf folgen dabei vorzugsweise folgender Reihenfolge:

    a. Bilden der Drehzahldifferenz $\Delta n_i$ zwischen Soll-und Ist-Drehzahl zum Zeitpunkt $t_i$:

$$\Delta n = (n_{Soll} - n_{Ist}) \qquad (Gl.\ 14)$$

b. Überlappende Berechnung des Drehzahlsummengradienten mit einer Programmzykluszeit $t_p$ = 20 ms:

$$\dot{n} = \frac{\Delta n_i - \Delta n_{i-2}}{2} \qquad\qquad (\text{Gl. 15})$$

b. Zwischenspeicherung der Drehzahldifferenzen für den nächsten Berechnungslauf:

$$\Delta n_{i-2} = \Delta n_{i-1} \qquad\qquad (\text{Gl. 16})$$

$$\Delta n_{i-1} = \Delta n_i \qquad\qquad (\text{Gl. 17})$$

d. Errechnen der Zeitspanne bis zum Erreichen des Synchronzeitpunkt $t_S$ sowie der dazu notwendigen Programm-zyklen:

$$t_{Si} = \frac{\Delta n_i}{\dot{n}} \ \rightarrow \ \text{k* } t_p \qquad\qquad (\text{Gl. 18})$$

und

e. Betätigen der Getriebebremse bis zum Erreichen des Synchronzeitpunktes $t_S$ oder eines vorbestimmten Abstandes zu diesem Synchronzeitpunkt $t_S$.

Bezugszeichen

| | |
|---|---|
| n | Drehzahl |
| $n_{Soll}$ | Solldrehzahl der Vorgelege- bzw. Getriebeeingangswelle während der Schaltung |
| $n_{Ist}$ | Istdrehzahl der Vorgelege- bzw. Getriebeeingangswelle während der Schaltung |
| $n_i$ | Drehzahl zum Zeitpunkt $t_i$ |
| $\Delta n_i$ | Drehzahldifferenz zwischen Soll- und Ist-Drehzahl zum Zeitpunkt $t_i$ |
| t | Zeit |
| $t_i$ | Zeitpunkt |
| $t_p$ | Programm-Zykluszeit |
| $t_s$ | Zeitpunkt, zu dem sich Soll- und Ist-Drehzahl-verlauf schneiden (Synchronzeitpunkt) |
| $t_{Si}$ | Zeit vom Zeitpunkt $t_i$ bis zum Synchronpunkt $t_S$ |
| $\dot{n}$ | Drehzahlsummengradient |

**Patentansprüche**

1. Verfahren zur Steuerung und Regelung einer Getriebebremse eines als Vorgelegegetriebe ausgebildeten Automatgetriebes, mit einer Getriebeeingangswelle, mit mindestens einer von der Getriebeeingangswelle antreibbaren Vorgelegewelle und mit einer Getriebeausgangswelle, bei dem auf der Getriebeeingangswelle, auf der Vorgelegewelle und/oder auf der Getriebeausgangswelle Loszahnräder drehbar gelagert und/oder Festzahnräder drehfest angeordnet sind, die zumindest paarbildend in Zahneingriff miteinander stehen, wobei die Losräder zur Durchführung eines Gangwechsels mittels Koppelvorrichtungen mit ihrer Getriebewelle drehfest verbindbar sind, sowie mit einer Getriebebremse und einem Steuergerät zum Steuern und Regeln zumindest dieser Getriebebremse, mit der die Vorgelegewelle bei einem Hochschaltvorgang derartig abbremsbar ist, dass deren Drehzahl zum Einkoppelzeitpunkt der Synchrondrehzahl entspricht oder dieser bis auf einen vorbestimmen Abstand nahe kommt, wobei zur Steuerung und Regelung der Getriebebremse der Bremsgradient der Vorgelegewellen- bzw. der Getriebeeingangswellendrehzahl sowie die Getriebeausgangswellendrehzahl und der Gradient der Getriebeausgangswellendrehzahl berücksichtigt werden, wobei aus dem Gradient der Vorgelegewellen- bzw. Getriebeeingangswellendrehzahl und dem Gradient der Getriebeausgangswellendrehzahl ein Summengradient errechnet wird, **dadurch gekennzeichnet, dass** aus dem Drehzahfsummengradienten $\dot{n}$ der Abschaltzeitpunkt für die Getriebebremse zum Erreichen der Synchrondrehzahl berechnet wird.

2. Verfahren nach Anspruch zu, **dadurch gekennzeichnet, dass** sich der Drehzahlsummengradient $\dot{n}$ errechnen lässt mit der Gleichung

$$\dot{n} = \frac{\Delta n_i - \Delta n_{i-1}}{t_p} \qquad\qquad \text{(Gl. 19)}$$

mit $t_p$ für die Programmzykluszeit und $\Delta n_i$ für die Drehzahldifferenz zwischen Soll- und Ist-Drehzahl der Vorgelege- oder Getriebeeingangswellendrehzahl zum Zeitpunkt $t_i$.

3. Verfahren nach Anspruch 1 oder 2, **dadurch gekennzeichnet, dass** die Abschaltzeitspanne bis zum Erreichen der Synchrondrehzahl errechenbar ist mit der Gleichung

$$t_{Si} = \frac{\Delta n_i}{\dot{n}} = k \, {}^* t_p \qquad\qquad \text{(Gl. 20)}$$

mit k für die Anzahl der Programmzyklen.

4. Verfahren nach wenigstens einem der vorherigen Ansprüche, **dadurch gekennzeichnet, dass** ein Programmablauf für ein die Getriebebremse ansteuerndes Steuerungs- und Regelungsgerät folgende Schritte aufweist:

    a. Bilden der Drehzahldifferenz $\Delta n_i$ zwischen Soll- und Ist-Drehzahl zum Zeitpunkt $t_i$:

$$\Delta n = (n_{Soll} - n_{Ist}), \qquad\qquad \text{(Gl. 21)}$$

    b. Überlappende Berechnung des Drehzahlsummengradienten:

$$\dot{n} = \frac{\Delta n_i - \Delta n_{i-2}}{2}, \qquad\qquad \text{(Gl. 22)}$$

    c. Zwischenspeicherung der Drehzahldifferenzen für den nächsten Berechnungslauf:

$$\Delta n_{i-2} = \Delta n_{i-1} \qquad\qquad \text{(Gl. 23)}$$

$$\Delta n_{i-1} = \Delta n_i, \qquad\qquad \text{(Gl. 24)}$$

d. Errechnen der Zeitspanne bis zum Synchronzeitpunkt und Berechnen der Anzahl der Programmzyklen:

$$t_{Si} = \frac{\Delta n_i}{\overset{\bullet}{n}} \rightarrow k^* \, t_p \qquad\qquad \text{(Gl. 25)}$$

und

e. Betätigen der Getriebebremse bis zum Erreichen des Synchronzeitpunktes $t_S$ oder eines vorbestimmten Abstandes zu diesem Synchronzeitpunkt $t_S$.

**Claims**

1.  Method for the the control of a transmission brake of a countershaft-type automatic transmission, with a transmission input shaft, with at least one countershaft driveable by the transmission input shaft, and with a transmission output shaft; with the transmission input shaft, the countershaft and/or the transmission output shaft having pivoted idler gears and/or nonrotational fixed gears arranged on them, with at least pairs of them meshing with each other, with the idler gears being nonrotationally connectable via a coupling device with their transmission shaft for performance of a gearchange, as well as with a transmission brake and a control unit for the control of at least this transmission brake, with which the countershaft can be braked during an upshift in such a manner that its speed at the time of engagement corresponds to the synchronous speed, or approximates it up to a prescribed differential, with the braking gradient of the countershaft speed or the transmission input shaft speed as well as the transmission output shaft speed and the gradient of the transmission output shaft speed being considered for control of the transmission brake, with an overall gradient being calculated on the basis of the gradient of the countershaft speed or the transmission input shaft speed and the gradient of the transmission output shaft speed, **characterized in that** based on the overall speed gradient n the cut-out time for the transmission brake for achievement of synchronous speed is calculated.

2.  Method according to claim 1, **characterized in that** the overall speed gradient $\overset{\bullet}{n}$ can be calculated with the equation

$$\overset{\bullet}{n} = \frac{\Delta n_i - \Delta n_{i-1}}{t_p} \qquad\qquad \text{(Equation 19)}$$

with $t_p$ for the program cycle time and $\Delta n_i$ for the speed differential between nominal and actual speed of the countershaft speed or transmission input shaft speed at the time $t_i$.

3.  Method according to claim 1 or 2, **characterized in that** the cut-out period until achievement of the synchronous speed can be calculated with the equation

$$t_{Si} = \frac{\Delta n_i}{\overset{\bullet}{n}} = k^* t_p \qquad\qquad \text{(Equation 20)}$$

with k for the number of program cycles.

4.  Method according to at least one of the preceding claims, **characterized in that** a program sequence for a control device acting on the transmission brake consists of the following phases:

    a. Creation of the speed differential $\Delta n_i$ between nominal and actual speed at the time $t_i$:

$$\Delta n = (n_{Soll} - n_{Ist}) \qquad \text{(Equation 21)}$$

b. Overlapping calculation of the overall speed gradient:

$$\dot{n} = \frac{\Delta n_i - \Delta n_{i-2}}{2} \qquad \text{(Equation 22)}$$

c. Buffering of the speed differentials for the following calculations:

$$\Delta n_{i-2} = \Delta n_{i-1} \qquad \text{(Equation 23)}$$

$$\Delta n_{i-1} = \Delta n_i \qquad \text{(Equation 24)}$$

d. Calculation of the time until achievment of synchronous time and calculation of the number of program cycles:

$$t_{Si} = \frac{\Delta n_i}{\dot{n}} \rightarrow k^* t_p \qquad \text{(Equation 25)}$$

e. Activation of the transmission brake until achievment of synchronous time $t_s$ or a prescribed differential to this synchronous time $t_s$.

**Revendications**

1. Procéde de commande et de réglage d'un frein d'une transmission automatique réalisée comme boîte de vitesses à arbres intermédiaires, dotée d'un arbre d'entrée de boîte de vitesses, d'au moins un arbre intermédiaire qui peut être entraîné par l'arbre d'entrée de la boîte de vitesses et d'un arbre de sortie de la boîte de vitesses, dans laquelle sur l'arbre d'entrée de la boîte de vitesses, sur l'arbre intermédiaire et/ou sur l'arbre de sortie de la boîte de vitesses sont logés en rotation des pignons fous et/ou disposés de façon solidaire en rotation des pignons fixes, ceux-ci engrenant au moins par paires les uns avec les autres, sachant que les pignons fous peuvent être liés solidaires en rotation à l'aide de dispositifs de couplage avec leur arbre de boîte de vitesses pour effectuer un changement de rapport, et dotée d'un frein de boîte de vitesses et d'un dispositif de commande pour la commande et le réglage d'au moins ce frein de boîte de vitesses, à l'aide duquel l'arbre intermédiaire peut être freiné lors d'un passage montant de manière à ce que sa vitesse de rotation corresponde au moment du couplage au régime de synchronisation ou se rapproche de celui-ci jusqu'à une distance prédéterminée, sachant que pour la commande et le réglage du frein de boîte de vitesses sont pris en considération le gradient de freinage du régime de l'arbre intermédiaire ou de l'arbre d'entrée de la boîte de vitesses ainsi que du régime de l'arbre de sortie de la boîte de vitesses et le gradient du régime de l'arbre de sortie de la boîte de vitesses, sachant que à partir du gradient du régime de l'arbre intermédiaire ou de l'arbre d'entrée de la boîte de vitesses et du gradient du régime de l'arbre de sortie de la boîte de vitesses est calculé un gradient cumulé, **caractérisé en ce que** à partir du gradient cumulé de régime $\dot{n}$ est calculé le moment de coupure du frein de boîte de vitesses pour atteindre le régime de synchronisation.

2. Procédé selon la revendication 1, **caractérisé en ce que** le gradient cumulé de régime $\dot{n}$ peut être calculé à l'aide de l'équation

$$\overset{\bullet}{n} = \frac{\Delta n_i - \Delta n_{i-1}}{t_p}$$

(équation 19)

avec $t_p$ pour le temps de cycle de programme et $\Delta n_i$ pour la différence de régime entre la vitesse de rotation de consigne et la vitesse de rotation réelle du régime de l'arbre intermédiaire ou de l'arbre d'entrée de la boîte de vitesses au moment $t_i$.

**3.** Procédé selon la revendication 1 ou 2, **caractérisé en ce que** le laps de temps de coupure jusqu'à atteindre le régime de synchronisation peut être calculé à l'aide de l'équation

$$t_{Sl} = \frac{\Delta n_i}{\overset{\bullet}{n}} = k * t_p$$

(équation 20)

avec k pour le nombre de cycles de programme.

**4.** Procédé selon au moins une des revendications précédentes, **caractérisé en ce que** un déroulement de programme pour un dispositif de commande et de réglage pilotant le frein de boîte de vitesses comporte les opérations suivantes :

a. Formation de la différence de régime $\Delta n_i$ entre le régime de consigne et le régime réel au moment $t_i$.

$$\Delta n = (n_{soll} - n_{Ist})$$

(équation 21)

b. Calcul superposé du gradient cumulé de régime :

$$\overset{\bullet}{n} = \frac{\Delta n_i - \Delta n_{i-2}}{2}$$

(équation 22)

c. Bufférisation des différences de régime pour le calcul successif :

$$\Delta n_{i-2} = \Delta n_{i-1}$$

(équation 23)

$$\Delta n_{i-1} = \Delta n_i$$

(équation 24)

d. Calcul du laps de temps jusqu'au moment de synchronisation et calcul du nombre de cycles de programme :

$$t_{Sl} = \frac{\Delta n_i}{\overset{\bullet}{n}} \rightarrow k^* t_p$$

(équation 25)

et

e. Actionnement du frein de boîte de vitesses jusqu'à atteindre le moment de synchronisation $t_s$ ou une distance

prédéterminée par rapport à ce moment de synchronisation $t_s$.

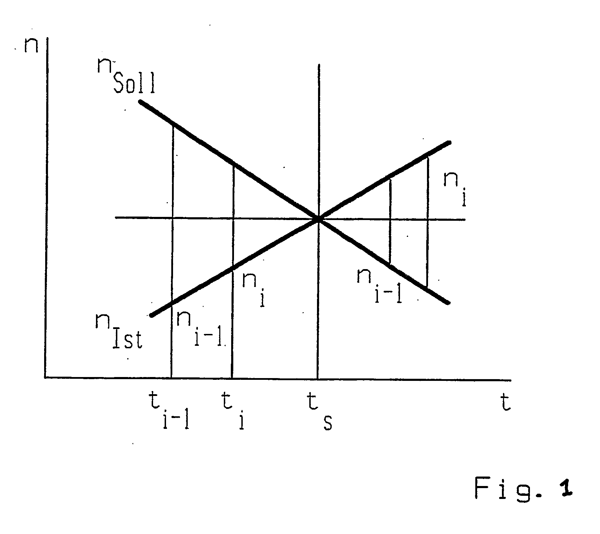

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3834499 A

- DE 19652916 A1